# EUROPEAN PATENT APPLICATION

(11) **EP 4 810 447 A1**
(43) Date of publication of application: **23.09.2026**
(21) Application number: 26162678.2
(22) Date of filing: 05.03.2026
(51) Int. Cl.: C01G 53/504, H01M 4/525

(54) **POSITIVE ELECTRODE ACTIVE MATERIALS, POSITIVE ELECTRODES, AND RECHARGEABLE LITHIUM BATTERIES**

(30) Priority: 18.03.2025 KR 20250034848
(71) Applicant: SAMSUNG SDI CO., LTD., Yongin-si, Gyeonggi-do 17084 (KR)
(72) Inventor: YOON, Jaesang, 17084 Yongin-si (KR); KANG, Seok Mun, 17084 Yongin-si (KR); KIM, Young-Ki, 17084 Yongin-si (KR); JEONG, Jaeyoung, 17084 Yongin-si (KR); KIM, Jihyeun, 17084 Yongin-si (KR); KIM, Eugene, 17084 Yongin-si (KR)
(74) Representative: Maiwald GmbH

(57) **Abstract**

A positive electrode active material includes polycrystalline large particles and single-crystalline small particles. The polycrystalline large particles have an average particle diameter (D₅₀) of about 9 µm to about 20 µm. The single-crystalline small particles have an average particle diameter (D₅₀) of about 1 µm to about 9 µm.

## Description

### BACKGROUND

### 1. Field

Positive electrode active materials, positive electrodes including the positive electrode active materials, and rechargeable lithium batteries are disclosed.

### 2. Description of the Related Art

Rechargeable lithium batteries are used as power sources in portable information devices such as a cell phones, laptops, smart phones, and the like. Because they have high energy density and are easy portable, rechargeable lithium batteries are used as driving power sources or power storage power sources for hybrid or electric vehicles.

To achieve high-energy density rechargeable lithium batteries, high-nickel positive electrode active materials with a nickel amounts of greater than 80 mol% based on 100 mol% of the total metal excluding lithium have been developed. But costs of the raw materials to manufacture positive electrode active materials has rapidly increased. As a result, mid-nickel (Mid-Ni) positive electrode active materials with a nickel amounts of 50 mol% to 80 mol% based on 100 mol% of total metals excluding lithium are being developed.

However, when using a mid-nickel positive electrode active material, there are problems in that the initial efficiency and cycle-life of the rechargeable lithium battery deteriorate due to poor structural stability of the materials at high voltage.

### SUMMARY

Embodiments of the present disclosure provide a positive electrode active material for a rechargeable lithium battery, which is based on a mid-nickel positive electrode active material that can provide structural stability at high voltage.

Some example embodiments provide a positive electrode active material for a rechargeable lithium battery, the positive electrode active material including polycrystalline large particles and single-crystalline small particles, wherein the polycrystalline large particles have an average particle diameter (D₅₀) of about 9 µm to about 20 µm and are represented Chemical Formula 1; and the single-crystalline small particles have an average particle diameter (D₅₀) particle diameter of about 1 µm to about 9 µm and are represented by Chemical Formula 2, wherein Chemical Formula 1 is Liₐ₁Niₓ₁Mn_{y1}Co_{z1}Al_{b1}O_{2-c1} and Chemical Formula 2 is Liₐ₂Niₓ₂Mn_{y2}Co_{z2}M¹_{b2}O_{2-c2}, with each symbol in Chemical Formulas 1 and 2 as follows in the detailed description.

The positive electrode active material of embodiments of the present disclosure can provide structural stability at high voltage while being based on a mid-nickel positive electrode active material. Therefore, by using the positive electrode active material, the initial efficiency and cycle-life of a rechargeable lithium battery may be improved and rapid charging is possible.

### BRIEF DESCRIPTION OF THE DRAWINGS

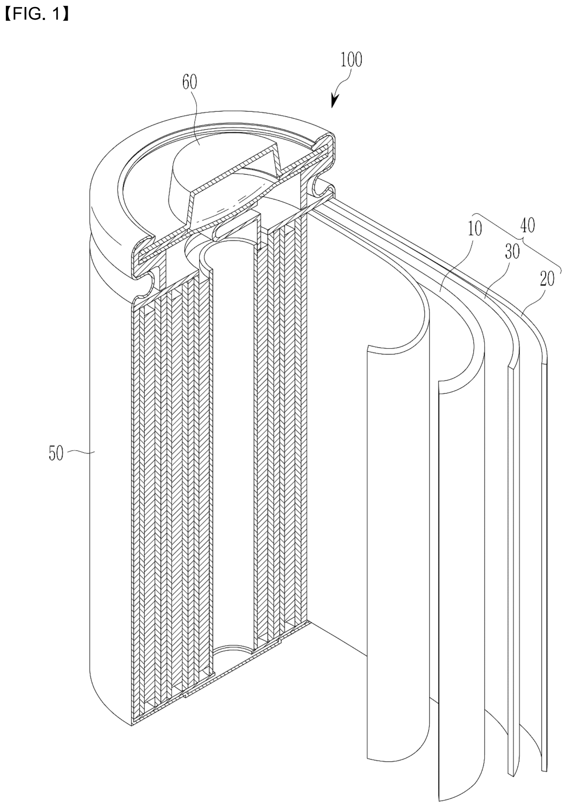

FIGS. 1 to 4 are schematic views of rechargeable lithium batteries according to embodiments of the present disclosure.

### DETAILED DESCRIPTION

Hereinafter, specific embodiments will be described in detail so that those of ordinary skill in the art can easily implement them. However, this disclosure may be embodied in many different forms and is not limited to the example embodiments set forth herein.

The terminology used herein is used to describe embodiments only and is not intended to limit the present disclosure. A singular expression includes a plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but do not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating the average particle diameter from this. As used herein, when a definition is not otherwise provided, the average particle diameter may mean the diameter (D₅₀) of particles having a cumulative volume of 50 volume% in the particle size distribution. As used herein, when a definition is not otherwise provided, the average particle diameter means a diameter (D₅₀) of particles having a cumulative volume of 50 volume% in the particle size distribution that is obtained by measuring the size (diameter or major axis length) of about 20 particles at random in a scanning electron microscope image.

Here, "or" is not to be construed as an exclusive meaning, for example, "A or B" is construed to include A, B, A+B, and the like.

"Metal" means ordinary metals, transition metals and metalloids (semi-metals).

### Positive Electrode Active Material

In embodiments of the present disclosure, a positive electrode active material for a rechargeable lithium battery includes polycrystalline large particles and single-crystalline small particles, wherein the polycrystalline large particles have an average particle diameter (D₅₀) of about 9 µm to about 20 µm and are represented Chemical Formula 1; and the single-crystalline small particles have an average particle diameter (D₅₀) of about 1 µm to about 9 µm and are represented by Chemical Formula 2.

[Chemical Formula 1] Liₐ₁Niₓ₁Mn_{y1}CO_{z1}Al_{b1}O_{2-c1}

In Chemical Formula 1, 0.8<a1≤1.2, 0.50≤x1≤0.80, 0.10≤y1≤0.40, 0≤z1≤0.05, 0.005≤b1≤0.015, and 0<c1≤0.05.

[Chemical Formula 2] Liₐ₂Niₓ₂Mn_{y2}CO_{z2}M¹_{b2}O_{2-c2}

In Chemical Formula 2, M¹ is Y, Sr, W, or a combination thereof; 0.8<a2≤1.2, 0.50≤x2≤0.80, 0.10≤y2≤0.40, 0.01≤z≤0.10, 0≤b2≤0.01, and 0≤c2≤0.05.

Some example embodiments provide a positive electrode active material for a rechargeable lithium battery that is based on a mid-nickel positive electrode active material and has structural stability at high voltage.

As described above, with regard to the nickel content in the positive electrode active material, further mid-nickel positive electrode active materials are being developed. However, with mid-nickel positive electrode active materials, high-voltage design is essential to achieve the same energy density as in high-nickel positive electrode active materials. But due to the characteristics of the layered structure, a significant structural change may occur in mid-nickel positive electrode active materials that are operated at high voltage as compared to high-nickel positive electrode active materials operated at low voltage. To provide the same energy density as the high-nickel positive electrode active material while enabling high-voltage operation, the structural stability of the mid-nickel positive electrode active material must be considered.

With regard to the crystallinity and particle size of positive electrode active material, polycrystalline large particles may accumulate stress inside their structure as they undergo continuous volume changes during the charge/discharge process of a rechargeable lithium battery. This phenomenon leads to micro-cracks at the grain boundaries within the polycrystalline large particles, electrolyte solution penetration into the micro-cracks, and side reactions, which can ultimately become the main causes of increased resistance and reduced cycle-life of rechargeable lithium batteries.

In some example embodiments, by doping and/or coating mid-nickel polycrystalline large particles (hereinafter, "mid-nickel polycrystalline large particles") with aluminum, the structural stability of the mid-nickel-based polycrystalline large particles at high voltage may be enhanced. In addition, by mixing and using mid-nickel single-crystalline small particles (hereinafter, "mid-nickel single-crystalline small particles") with the mid-nickel polycrystalline large particles, the powder density, the positive electrode mixture density, and the energy density per volume of a rechargeable lithium battery may be improved. Thus, by using the positive electrode active materials of embodiments of the present disclosure, the initial efficiency and cycle-life of a rechargeable lithium battery may be improved and rapid charging may be enabled.

Hereinafter, the positive electrode active material of example embodiments is described in detail.

### Mid-Nickel Polycrystalline Large Particles

The average particle diameter (D₅₀) of the mid-nickel polycrystalline large particles may be about 9 µm to about 20 µm, and may be larger than the average particle diameter (D₅₀) of the single-crystalline small particles.

As described above, the mid-nickel polycrystalline large particles may be represented by Chemical Formula 1.

In Chemical Formula 1, x1 may satisfy 0.50≤x1≤0.80 or 0.60≤x1≤0.70. This may mean that the polycrystalline large particles are mid-nickel type. Further, the relationship between y1 and z1 may satisfy 2 ≤ y1/z1 or 3 ≤ y1/z1, and y1 may satisfy 0.20 ≤ y1 ≤ 0.35. If this manganese/cobalt molar ratio is satisfied, the high-temperature cycle-life of rechargeable lithium batteries may be improved by increasing thermal stability as compared to generally known mid-nickel positive electrode active materials (e.g., NCM622).

The amount of aluminum in the polycrystalline large particles (mid-nickel) may be measured by energy dispersive X-ray spectroscopy (EP-EDS), and the aluminum coating layer may be confirmed to be uniformly distributed. As such, b1 in Chemical Formula 1 may satisfy 0.005 ≤ b1 ≤ 0.015.

As the amount of aluminum in the mid-nickel polycrystalline large particles increases, the discharge capacity of the rechargeable lithium battery improves, but the high-temperature cycle-life tends to decrease. Considering these trade-off characteristics, the aluminum amount in the mid-nickel polycrystalline large particles may be controlled.

The mid-nickel polycrystalline large particles may include secondary particles formed by agglomerating primary particles containing lithium (Li), nickel (Ni), manganese (Mn), and cobalt (Co). An aluminum (Al) coating layer may be disposed on the surfaces of the secondary particles. In other words, among the metals included in the polycrystalline large particles, lithium (Li), nickel (Ni), manganese (Mn), and cobalt (Co) may form a core as secondary particles, and the aluminum may form a coating layer (i.e., a shell).

### Mid-Nickel Single-crystalline Small Particles

The average particle diameter (D₅₀) of the mid-nickel single-crystalline small particles may be about 1 µm to about 9 µm or about 1 µm to about 8 µm, which may be smaller than the average particle diameter (D₅₀) particle size of the polycrystalline large particles.

As described above, the mid-nickel single-crystalline small particles may be represented by Chemical Formula 2.

In Chemical Formula 2, x2 may satisfy 0.50≤x2≤0.80 or 0.60≤x2≤0.70. This may mean that the single-crystalline small particles are mid-nickel type.

### Mixing Ratio of Mid-Nickel Polycrystalline Large Particles and Mid-Nickel Single-crystalline Small Particles

A weight ratio of the mid-nickel polycrystalline large particles and the mid-nickel single-crystalline small particles may be about 10:90 to about 95:5, about 50:50 to about 70:30, or about 60:40 to about 30:70. Within these ranges, the effects of the mid-nickel polycrystalline large particles and the mid-nickel single-crystalline small particles may be harmonized.

### Powder Density of Positive Electrode Active Material

In embodiments of the present disclosure, by mixing and using the mid-nickel single-crystalline small particles with the mid-nickel polycrystalline large particles, the powder density, the positive electrode mixture density, and the energy density per volume of the rechargeable lithium battery may be improved. For example, the powder density of the positive electrode active material may be about 3.35 to about 3.8 g/cc, about 3.35 to about 3.6 g/cc, about 3.35 to about 3.5 g/cc, or about 3.38 to about 3.43 g/cc.

### Method of Preparing Positive Electrode Active Material

The mid-nickel polycrystalline large particles may be prepared by subjecting a raw material mixture including a first nickel-based precursor and a lithium raw material to a first firing. Then an aluminum raw material may be added and the mixture may subjected to a second firing.

When forming the aluminum coating layer, dry coating or wet coating may be used. When the amount of the aluminum coating layer is the same in the final mid-nickel polycrystalline large particles, a dry coating method may be advantageous in improving the discharge capacity and high-temperature cycle-life of a rechargeable lithium battery compared to a wet coating method.

The mid-nickel single-crystalline small particles may be prepared by subjecting a raw material mixture including a second nickel-type precursor and a lithium raw material to a first firing, adding a coating raw material thereto, subjecting the mixture to second firing, and then washing the result.

After the mid-nickel polycrystalline large particles and the mid-nickel single-crystalline small particles are prepared, the particles may be mixed in the mixing ratios described above.

### Positive Electrode

In embodiments of the present disclosure, a positive electrode includes a current collector and a positive electrode active material layer on the current collector, wherein the positive electrode active material layer includes the aforementioned positive electrode active material. The positive electrode active material layer may further include other types of positive electrode active materials in addition to the positive electrode active material. For example, the positive electrode active material layer may further include a binder, a conductive material, or a combination thereof.

### Density and Loading Level of the Positive Electrode Active Material Layer

The loading level of the positive electrode active material layer may be about 10 mg/cm² to about 40 mg/cm², for example about 10 mg/cm² to about 30 mg/cm², or about 10 mg/cm² to about 20 mg/cm². The density of the positive electrode active material layer in the compressed final positive electrode may be about 3.3 g/cc to about 3.7 g/cc, for example about 3.3 g/cc to about 3.6 g/cc or about 3.4 g/cc to about 3.58 g/cc. When using the positive electrode active material according to embodiments, it is advantageous to implement such loading level and positive electrode density, and a positive electrode with this loading level and positive electrode density in the above ranges is suitable for implementing a high-capacity, high-energy-density rechargeable lithium battery.

### Binder

The binder improves binding properties of positive electrode active material particles with one another and with a current collector. Examples of the binder include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon. But the present disclosure is not limited to these examples.

### Conductive Material

The conductive material is included to provide electrode conductivity and any electrically conductive material may be used that does not cause a chemical change in a battery. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

The amounts of the binder and conductive material may be about 0.5 wt% to about 5 wt%, based on 100 wt% of the positive electrode active material layer.

The positive electrode current collector may include an aluminum thin film. But the present disclosure is not limited thereto.

### Rechargeable Lithium Battery

In embodiments of the present disclosure, a rechargeable lithium battery includes the aforementioned positive electrode, a negative electrode, and an electrolyte. As an example, the rechargeable lithium battery may include a positive electrode, a negative electrode, a separator between the positive electrode and the negative electrode, and an electrolyte solution.

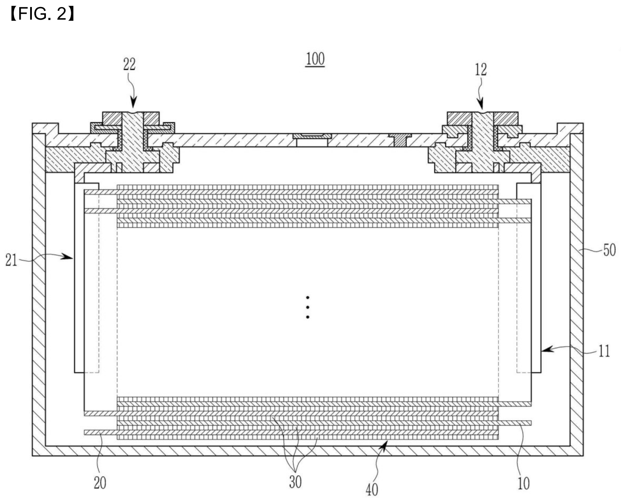

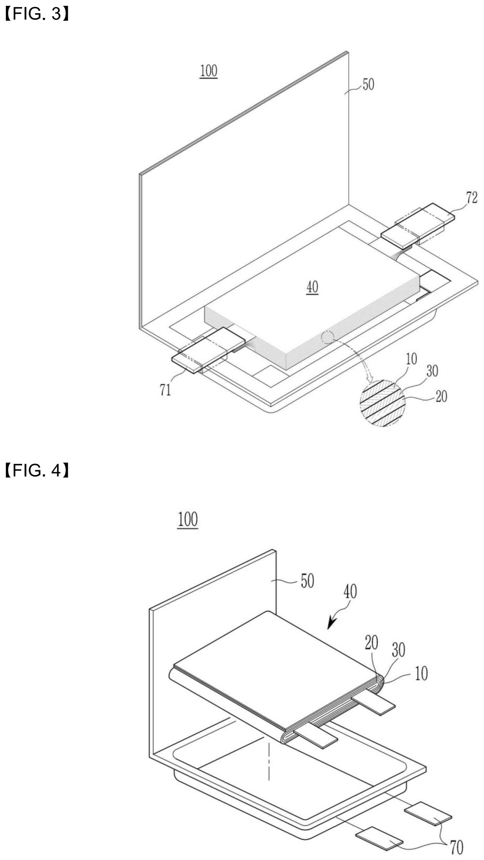

The rechargeable lithium battery may be cylindrical, prismatic, pouch, coin, etc. depending on its shape. FIGS. 1 to 4 are show the rechargeable lithium batteries according to some example embodiments. FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). As shown in FIG. 1, the rechargeable lithium battery 100 may include a sealing member 60 that seals the case 50. As shown in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70, that is, a positive electrode tab 71 and a negative electrode tab 72 forming an electrical path for inducing the current formed in the electrode assembly 40 to outside of the battery.

The rechargeable lithium battery according to embodiments may be rechargeable at a high voltage or suitable for being driven at the high voltage. The rechargeable lithium battery may have improved characteristics under high voltage conditions. That is, the rechargeable lithium battery may operate in a high voltage region so that charging can proceed in a voltage range where the charging upper limit voltage is about 3.0 to about 4.45 V. The rechargeable lithium battery may implement high capacity and long cycle-life characteristics even when charged at high voltage by including a positive electrode active material and a conductive material according to embodiments of the present disclosure.

### Negative Electrode

The negative electrode includes a current collector, and a negative electrode active material layer on the current collector. The negative electrode active material layer may include a negative electrode active material and may further include a binder, a conductive material, or a combination thereof.

### Negative Electrode Active Material

The material that reversibly intercalates/deintercalates lithium ions may include, for example crystalline carbon, amorphous carbon, or a combination thereof as a carbon-based negative electrode active material.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy may include an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0<x≤2), a Si-Q alloy, or a combination thereof. In the formula Si-Q, Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some example embodiments, the silicon-carbon composite may be in the form of silicon particles with amorphous carbon coated on the surfaces of the silicon particles. For example, silicon-carbon composite may include secondary particles (core) in which silicon primary particles are assembled and an amorphous carbon coating layer (shell) on the surfaces of the secondary particles. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

If the silicon-carbon composite includes silicon and amorphous carbon, an amount of silicon may be about 10 wt% to about 50 wt% and an amount of amorphous carbon may be about 50 wt% to about 90 wt%, based on 100 wt% of the silicon-carbon composite. In addition, if the composite includes silicon, amorphous carbon, and crystalline carbon, an amount of silicon may be about 10 wt% to about 50 wt%, an amount of crystalline carbon may be about 10 wt% to about 70 wt%, and an amount of amorphous carbon may be about 20 wt% to about 40 wt%, based on 100 wt% of the silicon-carbon composite.

A thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x≤2). The atomic content ratio of Si:O, which indicates a degree of oxidation, may be about 99:1 to about 33:67. As used herein, when a definition is not otherwise provided, an average particle diameter (D₅₀) indicates a particle where a cumulative volume is about 50 volume% in a particle size distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

### Binder

The binder serves to adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming a fiber, and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity and any electrically conductive material that does not cause a chemical change in a battery. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum silver, and the like; a conductive polymer such as a polyphenylene derivative; or a mixture thereof.

An amount of the negative electrode active material may be about 95 wt% to about 99.5 wt% based on 100 wt% of the negative electrode active material layer, and an amount of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil, sheet, or foam. A thickness of the current collector may be, for example, about 1 µm to about 20 µm, about 5 µm to about 15 µm, or about 7 µm to about 10 µm.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvent may be used alone or in a mixture of two or more types. When two or more types are used in a mixture, a mixing ratio can be adjusted according to the desired battery performance, as is widely known in the art.

When using a carbonate-based solvent, a cyclic carbonate and a chain carbonate may be mixed and used. The cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethyl carbonate, vinylene carbonate, or an ethylene carbonate-based compound to improve battery cycle-life.

Examples of the ethylene carbonate-based compound include fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, and the like.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. If the concentration of lithium salt is within this range, the electrolyte solution has appropriate ionic conductivity and viscosity. Thus, excellent performance can be achieved and lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON^{®}, and polytetrafluoroethylene, or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer. In other embodiments, a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described below. However, the following examples are only examples and the present disclosure is not limited to the following examples.

### (Preparation of Polycrystalline Large Particles)

### Preparation Example 1

Ni_{0.65}Co_{0.05}Mn_{0.30}O having an average particle diameter (D₅₀) of 14 µm and LiOH was mixed to have a molar ratio of (Ni+Co+Mn):Li = 1:1.05. Then, the mixture was heat-treated at 870 °C under an oxygen atmosphere for 8 hours to prepare secondary particles with an average particle diameter (D₅₀) of 14 µm. The secondary particles had a composition of LiNi_{0.65}Co_{0.05}Mn_{0.30}O₂ and included the primary particles with an average particle diameter (D₅₀) of about 3 µm.

Based on 100 parts by mole of the secondary particles, 1 part by mole of Al₂O₃ was added thereto and then heat-treated at 825 °C for 8 hours to form an aluminum coating layer on the secondary particle surfaces. Thus mid-nickel polycrystalline large particles of Preparation Example 1 were obtained.

### Preparation Example 2

Except for adding 0.8 parts by mole of Al₂O₃ based on 100 parts by mole of the secondary particles, mid-nickel polycrystalline large particles of Preparation Example 2 were obtained in the same manner as in Preparation Example 1.

### Preparation Example 3

Except for adding 0.5 parts by mole of Al₂O₃ based on 100 parts by mole of the secondary particles, mid-nickel polycrystalline large particles of Preparation Example 3 were obtained in the same manner as in Preparation Example 1.

### Preparation Example 4

100 parts by mole of the secondary particles was mixed with 1 part by mole of Al₂(SO₄)₂·14~18H₂O in an aqueous solvent to prepare an aluminum coating solution, and the solution was dried to produce a coated product. A heat treatment was then performed at 825 °C for 8 hours to form an aluminum coating layer on the secondary particle surfaces. Thus, mid-nickel polycrystalline large particles of Preparation Example 4 were obtained.

### Preparation Example 5

Mid-nickel polycrystalline large particles of Preparation Example 5 were obtained in the same manner as in Preparation Example 4 except that the aluminum coating solution was prepared by mixing 100 parts by mole of the secondary particles with 0.8 parts by mole of Al₂(SO₄)₂·14~18H₂O in an aqueous solvent.

### Preparation Example 6

Mid-nickel polycrystalline large particles of Preparation Example 6 were obtained in the same manner as in Preparation Example 4 except that the aluminum coating solution was prepared by mixing 100 parts by mole of the secondary particles with 0.5 parts by mole of Al₂(SO₄)₂·14~18H₂O in an aqueous solvent.

### Comparative Preparation Example 1

Mid-nickel polycrystalline large particles of Comparative Preparation Example 1 were obtained in the same manner as in Preparation Example 1 except that Al₂O₃ or Al₂(SO₄)₂·14~18H₂O was not mixed at all.

### Comparative Preparation Example 2

Ni_{0.91}Co_{0.06}Mn_{0.03}O with an average particle diameter (D₅₀) of 14 µm and LiOH were mixed to have a molar ratio of (Ni+Co+Mn):Li =1:1.05. The mixture was then primarily heat-treated at 750 °C under an oxygen atmosphere for 8 hours to prepare secondary particles with an average particle diameter (D₅₀) of 14 µm. The secondary particles had a composition of LiNi_{0. 91}Co_{0.06}Mn_{0.03}O₂ and included the primary particles with an average particle diameter (D₅₀) of about 3 µm.

Based on 100 parts by mole of the secondary particles, 1 part by mole of Al₂O₃ was added thereto and then heat-treated at 710 °C for 8 hours to form an aluminum coating layer on the secondary particle surfaces. Thus, high-nickel polycrystalline large particles of Comparative Preparation Example 2 were obtained.

### Evaluation Example 1: Evaluation of Polycrystalline Large Particles

### (1) Final Chemical Formula Analysis of Polycrystalline Large Particles

The polycrystalline large particles according to the preparation examples and the comparative preparation examples were subjected to an inductively coupled plasma (ICP) analysis to determine the chemical formula of final large particles. The results are shown in Table 1 below.

### (2) Rechargeable Lithium Battery Cells for Evaluation

The polycrystalline large particles of the preparation examples and the comparative preparation examples were used as positive electrode active materials to make rechargeable lithium battery cells. 98.5 wt% of the polycrystalline large particles, 1.0 wt% of a polyvinylidene fluoride binder, and 0.5 wt% of a carbon nanotube conductive material were mixed to prepare a positive electrode active material layer slurry. The slurry was coated on an aluminum foil current collector, dried, and compressed to make a positive electrode.

97.5 wt% of a graphite negative electrode active material, 1.5 wt% of carboxymethyl cellulose, and 1 wt% of styrene butadiene rubber were mixed in a water solvent to prepare a negative electrode active material layer slurry. The negative electrode active material layer slurry was coated on a copper foil current collector, dried, and compressed to make a negative electrode.

A polytetrafluoroethylene separator and an electrolyte solution prepared by dissolving 1 M LiPF₆ in a mixed solvent of ethylene carbonate and dimethyl carbonate in a volume ratio of 3:7 were used to make a rechargeable lithium battery cell as per a common method.

### (3) Evaluation of Initial Charge/discharge Capacity and Efficiency

The rechargeable lithium battery cells made for the evaluation were charged at a constant current of 0.2 C at 25 °C to an upper limit voltage of 4.3 V, at a constant voltage of 0.05 C, and then discharged at 0.2 C to a cut-off voltage of 3.0 V to perform an initial charge and discharge. In Table 1 below, initial charge capacity, initial discharge capacity, and a ratio of the latter to the former as efficiency are shown.

### (4) High-temperature Cycle-life Characteristics

After the initial charge and discharge, the cells were charged/discharged for 50 cycles or more at 1.0 C within a voltage range of 3.0 V to 4.3 V at 45 °C to calculate a ratio of 50th cycle discharge capacity to the initial discharge capacity. The results are shown in Table 1.

**Table 1**

| | Final chemical formula of large particles | Al coating method | 0.2 C charge (mAh/g) | 0.2 C discharge (mAh/g) | Efficiency (%) | High-temperature cycle-life (%, 45 °C, 50cyc) |
|---|---|---|---|---|---|---|
| Comparative Preparation Example 1 | LiNi_{0.65}Co_{0.05}Mn_{0.30}O₂ | - | 223.7 | 196.4 | 87.8 | 94.4 |
| Comparative Preparation Example 2 | LiNi_{0.91}Co_{0.06}Mn_{0.03}O₂ | Dry | 249.6 | 220.6 | 88.4 | 93.4 |
| Preparation Example 1 | LiNi_{0.64}Co_{0.05}Mn_{0.30}Al_{0.01}O₂ | Dry | 222.7 | 196.6 | 88.3 | 98.5 |
| Preparation Example 2 | LiNi_{0.642}Co_{0.05}Mn_{0.30}Al_{0.008}O₂ | Dry | 223.3 | 197.0 | 88.2 | 96.5 |
| Preparation Example 3 | LiNi_{0.645}Co_{0.05}Mn_{0.30}Al_{0.005}O₂ | Dry | 224.1 | 197.2 | 88.0 | 94.4 |
| Preparation Example 4 | LiNi_{0.64}Co_{0.05}Mn_{0.30}Al_{0.04}O₂ | Wet | 222.6 | 197.1 | 88.6 | 96.0 |
| Preparation Example 5 | LiNi_{0.642}Co_{0.05}Mn_{0.30}Al_{0.008}O₂ | Wet | 223.7 | 198.1 | 88.6 | 93.7 |
| Preparation Example 6 | LiNi_{0.645}Co_{0.05}Mn_{0.30}Al_{0.005}O₂ | Wet | 224.4 | 198.6 | 88.5 | 91.9 |

Referring to Table 1, when operated at the same voltage, as the amount of Ni increased, which is a main element for expressing capacity,, Comparative Preparation Example 2 exhibited larger discharge capacity than Comparative Preparation Example, 1. But as both of the comparative examples did not include the high nickel for a high voltage region, the comparative examples exhibited relatively inferior high-temperature cycle-life. The more aluminum coating layer, the better discharge capacity of rechargeable lithium battery cells, but the high-temperature cycle-life tended to be reduced. With consideration to the trade-offs of these characteristics, the amount of the aluminum coating layer may be adjusted.

Further, in final polycrystalline large particles, if the amount of the aluminum coating layer is equal, a dry coating method may be more advantageous than a wet coating method in improving discharge capacity and high-temperature cycle-life of rechargeable lithium batteries.

### (Preparation of Single-crystalline Small Particles)

### Preparation Example 7

Ni_{0.60}Co_{0.10}Mn_{0.30}O with an average particle diameter (D₅₀) of 14 µm was mixed with LiOH to have a molar ratio of (Ni+Co+Mn):Li = 1:1.05. Then the mixture was heat-treated at 790 °C under an oxygen atmosphere for 12 hours to thereby preparing mid-nickel polycrystalline large particles having a composition of LiNi_{0.60}Co_{0.10}Mn_{0.30}O₂ and in a form of secondary particles having an average particle diameter (D₅₀) of 14 µm, with the primary particles having an average particle diameter (D₅₀) about 3 µm.

The polycrystalline large particles in the form of secondary particles were pulverized by using a Hosokawa Alpine Group jet mill under the conditions of blower: 35 Hz, AFG: 8000 rpm, and air: 4 kgf/cm². Then the pulverized particles were heat-treated at 660 °C for 16 hours under an oxygen atmosphere to thereby obtain mid-nickel single-crystalline small particles having an average particle diameter (D₅₀) of 2.98 µm.

### Comparative Preparation Example 3

Ni_{0.94}Co_{0.05}Mn_{0.01}O with an average particle diameter (D₅₀) of 14 µm and LiOH were mixed to have a molar ratio of (Ni+Co+Mn):Li = 1:1.05. The mixture was then heat-treated at 790 °C for 11 hours under an oxygen atmosphere to thereby high-nickel polycrystalline large particles having a composition of LiNi_{0.94}Co_{0.05}Mn_{0.01}O₂ in the form of secondary particles with an average particle diameter (D₅₀) of 14 µm, in which primary particles had an average particle diameter (D₅₀) about 3 µm.

The polycrystalline large particles in the form of secondary particles were pulverized by using a Hosokawa Alpine Group jet mill under the conditions of blower: 35 Hz, AFG: 8000 rpm, and air: 4 kgf/cm². Then the pulverized particles were heat-treated at 680 °C for 12 hours under the oxygen atmosphere to thereby obtain mid-nickel single-crystalline small particles having an average particle diameter (D₅₀) of 2.98 µm.

### Example 1

### 1. Preparation of Positive Electrode Active Material

The polycrystalline large particles (mid-nickel) of Preparation Example 1 and the single-crystalline small particles (mid-nickel) of Preparation Example 7 were mixed in a weight ratio of 7:3 to thereby obtain a positive electrode active material.

### 2. Rechargeable Lithium Battery Cell

98.5 wt% of the positive electrode active material, 1.0 wt% of a polyvinylidene fluoride binder, and 0.5 wt% of a carbon nanotube conductive material were mixed to prepare a positive electrode active material layer slurry. The slurry was coated on an aluminum foil current collector, dried, and compressed to make a positive electrode.

97.5 wt% of a graphite negative electrode active material, 1.5 wt% of carboxymethyl cellulose, and 1 wt% of styrene butadiene rubber were mixed in a water solvent to prepare a negative electrode active material layer slurry. The negative electrode active material layer slurry was coated on a copper foil current collector, dried, and compressed to make a negative electrode.

The positive and negative electrodes were used with a polytetrafluoroethylene separator and an electrolyte solution prepared by mixing ethylene carbonate and dimethyl carbonate in a volume ratio of 3:7 and dissolving 1 M LiPF₆ in the mixed solvent, thereby making a rechargeable lithium battery cell as per a common method.

### Example 2

A positive electrode active material and a rechargeable lithium battery cell were made in the same manner as in Example 1 except that the mid-nickel polycrystalline large particles of Preparation Example 1 and the mid-nickel single-crystalline small particles of Preparation Example 7 were mixed in a weight ratio of 5:5.

### Example 3

A positive electrode active material and a rechargeable lithium battery cell were made in the same manner as in Example 1 except that the mid-nickel polycrystalline large particles of Preparation Example 1 and the mid-nickel single-crystalline small particles of Preparation Example 7 were mixed in a weight ratio of 3:7.

### Example 4

A positive electrode active material and a rechargeable lithium battery cell were made in the same manner as in Example 1 except that the mid-nickel polycrystalline large particles of Preparation Example 2 and the mid-nickel single-crystalline small particles of Preparation Example 7 were mixed in a weight ratio of 7:3.

### Example 5

A positive electrode active material and a rechargeable lithium battery cell were made in the same manner as in Example 1 except that the mid-nickel polycrystalline large particles of Preparation Example 2 and the mid-nickel single-crystalline small particles of Preparation Example 7 were mixed in a weight ratio of 5:5.

### Example 6

A positive electrode active material and a rechargeable lithium battery cell were made in the same manner as in Example 1 except that the mid-nickel polycrystalline large particles of Preparation Example 2 and the mid-nickel single-crystalline small particles of Preparation Example 7 were mixed in a weight ratio of 3:7.

### Example 7

A positive electrode active material and a rechargeable lithium battery cell were made in the same manner as in Example 1 except that the mid-nickel polycrystalline large particles of Preparation Example 3 and the mid-nickel single-crystalline small particles of Preparation Example 7 were mixed in a weight ratio of 5:5.

### Example 8

A positive electrode active material and a rechargeable lithium battery cell were made in the same manner as in Example 1 except that the mid-nickel polycrystalline large particles of Preparation Example 3 and the mid-nickel single-crystalline small particles of Preparation Example 7 were mixed in a weight ratio of 3:7.

### Comparative Example 1

A positive electrode active material and a rechargeable lithium battery cell were made in the same manner as in Example 1 except that the mid-nickel polycrystalline large particles of Preparation Example 2 alone were used.

### Comparative Example 2

A positive electrode active material and a rechargeable lithium battery cell were made in the same manner as in Example 1 except that the mid-nickel single-crystalline small particles alone were used.

### Comparative Example 3

A positive electrode active material and a rechargeable lithium battery cell were made in the same manner as in Example 1 except that the high-nickel polycrystalline large particles of Comparative Preparation Example 2 and the high-nickel single-crystalline small particles of Comparative Preparation Example 3 were mixed in a weight ratio of 7:3.

The positive electrode active materials of the examples and the comparative examples were summarized in Table 2.

**Table 2**

| | Large particles | Small particles | Weight ratio of large particles : small particles |
|---|---|---|---|
| Comparative Example 1 | Preparation Example 2 | - | 10:0 |
| Comparative Example 2 | - | Preparation Example 7 | 0:10 |
| Comparative Example 3 | Comparative Preparation Example 2 | Comparative Preparation Example 3 | 7:3 |
| Example 1 | Preparation Example 1 | Preparation Example 7 | 7:3 |
| Example 2 | Preparation Example 1 | Preparation Example 7 | 5:5 |
| Example 3 | Preparation Example 1 | Preparation Example 7 | 3:7 |
| Example 4 | Preparation Example 2 | Preparation Example 7 | 7:3 |
| Example 5 | Preparation Example 2 | Preparation Example 7 | 5:5 |
| Example 6 | Preparation Example 2 | Preparation Example 7 | 3:7 |
| Example 7 | Preparation Example 3 | Preparation Example 7 | 5:5 |
| Example 8 | Preparation Example 3 | Preparation Example 7 | 3:7 |

### Evaluation Example 2: Evaluation of Mixed Positive Electrode Active Material of Large Particles and Small Particles

(1) The rechargeable lithium battery cells according to the examples and the comparative examples were charged to an upper limit voltage of 4.45 V at a constant current of 0.2 C and to 0.05 C at the constant voltage and then discharged to a cut-off voltage of 3.0 V at 0.2 C at 25 °C for initial charge and discharge. In Table 3 below, initial charge capacity, initial discharge capacity, and a ratio of the latter to the former as efficiency are shown.
(2) After the initial charge and discharge, the cells were charged and discharged for 50 cycles or more at 1.0 C within a voltage range of 3.0 V to 4.45 V at 45 °C to calculate a ratio of 50th cycle discharge capacity to the initial discharge capacity. The results are shown in Table 3.
(3) Powder Density: The polycrystalline large particles and the single-crystalline small particles were mixed according to each ratio and then taken by 3.0 g and added to a pellet mold. Subsequently, the pellet mold was pressed with a force of 4 tons for 30 seconds by using a hydraulic pressure press to measure and record a height of a pellet. The height was used to calculate a compressed volume, which was used to calculate powder density. The results are shown in Table 3.
(4) Capacity: A product of multiplying the initial discharge capacity and the powder density is shown in Table 3.

**Table 3**

| | Charge capacity (mAh/g) | Discharge capacity (mAh/g) | Efficiency (%) | High-temperature cycle-life (@45 °C, 50 cyc.) | Powder density (g/cc) | Capacity (mAh/cc) |
|---|---|---|---|---|---|---|
| Comparative Example 1 | 223.3 | 197.0 | 88.2 | 96.5 | 3.12 | 614.6 |
| Comparative Example 2 | 221.3 | 195.0 | 88.1 | 98.0 | 3.30 | 643.5 |
| Comparative Example 3 | 251.9 | 221.9 | 88.1 | 95.8 | 3.62 | 803.3 |
| Example 1 | 221.4 | 194.7 | 87.9 | 98.3 | 3.42 | 665.9 |
| Example 2 | 221.0 | 194.9 | 88.2 | 98.5 | 3.43 | 668.5 |
| Example 3 | 219.7 | 194.2 | 88.4 | 98.7 | 3.38 | 656.4 |
| Example 4 | 222.4 | 196.8 | 88.5 | 97.6 | 3.42 | 673.1 |
| Example 5 | 222.1 | 197.9 | 89.1 | 97.9 | 3.43 | 678.8 |
| Example 6 | 221.5 | 197.6 | 89.3 | 98.1 | 3.38 | 667.9 |
| Example 7 | 233.0 | 199.6 | 89.5 | 96.9 | 3.43 | 684.6 |
| Example 8 | 222.2 | 199.3 | 89.7 | 97.2 | 3.38 | 673.6 |

Referring to Table 3, the examples exhibited efficiency of 88% or more, high-temperature cycle-life of 97% or more, and capacity of 655 mAh/cc or more.

Comparative Example 2, which used the mid-nickel single-crystalline small particles alone as a positive electrode active material, exhibited superior cycle-life to Comparative Example 1, which used the high-nickel polycrystalline large particles alone as a positive electrode active material. On the other hand, Comparative Example 3, in which the high-nickel polycrystalline large particles and the high-nickel single-crystalline small particles were mixed, exhibited inferior high temperature cycle-life.

In the examples, the mid-nickel single-crystalline small particles and the mid-nickel polycrystalline large particle were mixed to increase density of a positive electrode active material layer as well as improve a cycle-life, thereby, increasing energy density of a positive electrode.

The positive electrode active material of embodiments of the present disclosure, which was represented by the examples described above, increased capacity due to an increase in efficiency and implemented high mixture density, thereby having high-density energy. The positive electrode active material of example embodiments exhibited high initial charge/discharge capacity and enabled rapid charging and simultaneously provided high-temperature cycle-life characteristics.

While this disclosure has been described in connection with what is presently considered to be practical example embodiments, it is to be understood that the disclosure is not limited to the disclosed embodiments. Rather, the present disclosure various modifications and equivalent arrangements.

### <Description of Symbols>

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material for a rechargeable lithium battery, the positive electrode active material comprising:
polycrystalline large particles and single-crystalline small particles;
wherein the polycrystalline large particles have an average particle diameter (D₅₀) of about 9 µm to about 20 µm, and the polycrystalline large particles are represented by Chemical Formula 1,
wherein the single-crystalline small particles have an average particle diameter (D₅₀) of about 1 µm to about 9 µm, and the single-crystalline small particles are represented by Chemical Formula 2,
wherein Chemical Formula 1 is:
Liₐ₁Niₓ₁Mn_{y1}CO_{z1}Al_{b1}O_{2-c1}
wherein, in Chemical Formula 1, 0.8<a1≤1.2, 0.50≤x1≤0.80, 0.10≤y1≤0.40, 0≤z1≤0.05, 0.005≤b1≤0.015, and 0<c1≤0.05,
wherein Chemical Formula 2 is:
Liₐ₂Niₓ₂Mn_{y2}Co_{z2}M¹_{b2}O_{2-c2}
wherein, in Chemical Formula 2, M¹ is Y, Sr, W, or a combination thereof; 0.8<a2≤1.2, 0.50≤x2≤0.80, 0.10≤y2≤0.40, 0.01≤z≤0.10, 0≤b2≤0.01, and 0≤c2≤0.05.

2. The positive electrode active material as claimed in claim 1, wherein in Chemical Formula 1 0.60 ≤ x1 ≤ 0.70.

3. The positive electrode active material as claimed in claim 1 or claim 2, wherein in Chemical Formula 1 a relationship between y1 and z1 satisfies 2 ≤ y1/z1.

4. The positive electrode active material as claimed in any one of claims 1-3, wherein in Chemical Formula 1 0.20 ≤ y1 ≤ 0.35.

5. The positive electrode active material as claimed in any one of claims 1-4, wherein in Chemical Formula 1 0.005 ≤ b1 ≤ 0.015.

6. The positive electrode active material as claimed in any one of claims 1-5, wherein the polycrystalline large particles comprise:
secondary particles formed by agglomerating primary particles that include Li,Ni, Mn, and Co; and
an Al coating layer is disposed on the surfaces of the secondary particles.

7. The positive electrode active material as claimed in any one of claims 1-6, wherein a coating layer is formed on surfaces of the primary particles constituting the polycrystalline large particles, and the coating layer comprises Y, Sr,W, or a combination thereof.

8. The positive electrode active material as claimed in any one of claims 1-7, wherein a weight ratio of the polycrystalline large particles and the single-crystalline small particles is about 10:90 to about 95:5.

9. The positive electrode active material as claimed in any one of claims 1-8, wherein a powder density of the positive electrode active material is about 3.35 g/cc to about 3.8 g/cc.

10. A positive electrode for a rechargeable lithium battery comprising
a positive electrode current collector; and
a positive electrode active material layer on the current collector,
wherein the positive electrode active material layer comprises the positive electrode active material as claimed in claim 1.

11. The positive electrode as claimed in claim 10, wherein a density of the positive electrode active material layer is about 3.3 g/cm³ to about 3.7 g/cm³.

12. The positive electrode as claimed in claim 10 or claim 11, wherein a loading level of the positive electrode active material layer is about 10 mg/cm² to about 40 mg/cm².

13. A rechargeable lithium battery comprising:
a positive electrode;
a negative electrode; and
an electrolyte,
wherein the positive electrode comprises the positive electrode for the rechargeable lithium battery as claimed in any one of claims 10-12.

14. The rechargeable lithium battery as claimed in any one of claims 10-13, wherein a charging upper limit voltage of the rechargeable lithium battery is about 3.0 V to about 4.45 V.
